# EUROPEAN PATENT SPECIFICATION

(11) **EP 1 723 077 B1**
(45) Date of publication and mention of the grant of the patent: **01.08.2007**
(21) Application number: 05717890.7
(22) Date of filing: 03.03.2005
(51) Int. Cl.: C01F 7/47, B01J 19/10

(54) **REMOVAL OF SODIUM OXALATE FROM A BAYER LIQUOR**
ABTRENNUNG VON NATRIUMOXALAT AUS EINER BAYER-LAUGE
RETRAIT DE L'OXALATE DE SODIUM D'UNE LIQUEUR BAYER

(30) Priority: 06.03.2004 GB 0405108
(43) Date of publication of application: 22.11.2006
(73) Proprietor: Accentus plc, London WC2N 5HR (GB)
(72) Inventor: McCAUSLAND, Linda, Jane, West Lafayette, IN 47906 (US); FENNELL, Martin, Ennis County Clare (IE)
(74) Representative: Mansfield, Peter Turquand
(86) International application number: PCT/GB2005/000812
(87) International publication number: WO 2005/085136

(56) References cited:
- WO-A-00/35579
- WO-A-02/089942
- WO-A-03/101578
- GB-A- 2 306 202
- US-A- 4 275 042

## Description

This invention relates to a method and apparatus for removing sodium oxalate from a Bayer liquor.

The Bayer process is a widely used process for obtaining pure alumina from bauxite ore. It involves treating the ore with hot sodium hydroxide solution at say 255°C, so alumina dissolves to form sodium aluminate, leaving other minerals from the ore in the form of red mud. The saturated sodium aluminate solution is cooled, and seeded with aluminium trihydroxide crystals. The aluminium in solution precipitates as the trihydroxide, and can then be calcined at say 1050°C to form pure alumina. The remaining solution, which may be referred to as Bayer liquor, can be recycled to treat fresh ore, after addition of any necessary sodium hydroxide to ensure it is concentrated enough.

There is however a risk that organic contaminants, and in particular sodium oxalate, will build up in the recycled liquor, and will reach a concentration at which sodium oxalate will co-precipitate with the aluminium trihydroxide. This is detrimental to the quality of the alumina, it causes the trihydroxide to form very small crystals, so leading to a wide variation in particle size, and it also leads to embrittlement of the precipitated particles. The oxalate ions may originate from the ore, or may be formed by caustic degradation of other organic compounds from the ore. It is therefore necessary to remove sodium oxalate from the Bayer liquor before it reaches this concentration.

For example at least a part of the Bayer liquor may be cooled, so sodium oxalate precipitates out. US 3 899 571 (=EP 0 013 407) describes a way of triggering precipitation in such a supersaturated solution, by adding recycled crystals of sodium oxalate to act as initiator; the resulting crystals can be separated by filtration, and some can be set aside as the next initiator. However, in practice it is found that the surfaces of the crystals become poisoned by other organic materials present in the liquor, and become inactive as crystal growth initiators.

According to the present invention there is provided a method for removing sodium oxalate from a Bayer liquor, the method comprising removing a stream of the liquor, treating it o be supersaturated with sodium oxalate, and then subjecting it to ultrasonic irradiation, and removing resultant crystals.

Preferably the stream of the liquor is subjected to ultrasonic irradiation for a time no more than 30 seconds, more preferably no more than 10 seconds, for example 2 seconds or 3 seconds. This may be achieved by causing the stream to flow through a duct, and continuously subjecting the contents of the duct to ultrasonic irradiation. Preferably the ultrasound is applied using a multiplicity of ultrasonic transducers attached to a wall of the duct in an array of separate transducers extending both circumferentially and longitudinally, each transducer being connected to a signal generator so that the transducer radiates no more than 3 W/cm², the transducers being sufficiently close together and the number of transducers being sufficiently high that the power dissipation within the vessel is between 25 and 150 W/litre. Preferably the duct is of width at least 0.10 m, that is to say if the duct is cylindrical it is of diameter at least 0.10 m. The values of power given here are those of the electrical power delivered to the transducers, as this is relatively easy to determine. Such an irradiation vessel is described in WO 00/35579. With such a vessel there is little or no cavitation at the surface of the wall, so that there is no erosion of the wall and consequently no formation of small particles of metal. Surprisingly, despite the presence of the organic materials in the liquor which tend to poison the surfaces of the crystals as they grow, satisfactory crystallisation of the sodium oxalate is achieved.

Preferably the ultrasound is supplied by a multiplicity of transducers coupled to the wall of a pipe carrying the supersaturated solution, the liquor flowing at such a rate that the solution is insonated for less than 2 s.

The initial treatment to supersaturate the oxalate in solution may for example involve evaporation and cooling, or just cooling, before the liquor is subjected to ultrasound. This ensures that any materials that are readily crystallised have already formed crystals.

After the ultrasonic treatment, the resulting crystalline material is typically a mixture of sodium oxalate with other organic or inorganic sodium salts.

The treatment to make the solution supersaturated may for example involve cooling to about 70°C, although the requisite temperature depends upon the initial concentration of the solution being cooled. In another example the solution is cooled to about 40°C before being subjected to insonation. Even better removal of these products can be achieved by further cooling the solution after the insonation. In one embodiment the stream of liquor subjected to ultrasound is only part of the liquor subjected to crystallisation, so that the liquor subjected to ultrasound can then be mixed with a supersaturated solution, so that crystal growth occurs. The resulting crystals are then easier to separate from remaining liquid.

Good removal of the sodium oxalate is achieved by first subjecting a stream of liquor to ultrasonic irradiation, optionally mixing the irradiated liquor with non-irradiated liquor, allowing time for crystal growth to occur in the ultrasonically irradiated-liquor (or the mixed liquor) so as to produce crystal-containing liquor, and then subjecting at least part of the resulting crystal-containing liquor to further ultrasonic irradiation. This may for example be achieved by using a second ultrasonic irradiation vessel, and/or by feeding crystal-containing liquor back into the liquor stream fed to the first ultrasonic irradiation vessel. This second ultrasonic treatment may have the effect of breaking up small crystals, , or cleaning their surfaces, so that they grow to a larger size.

The invention will now be further and more particularly described by way of example only and with reference to the accompanying drawings, in which:
Figure 1 shows a flow diagram of plant for removing sodium oxalate from spent Bayer liquor; and
Figure 2 shows a flow diagram of a modification to the plant of figure 1.

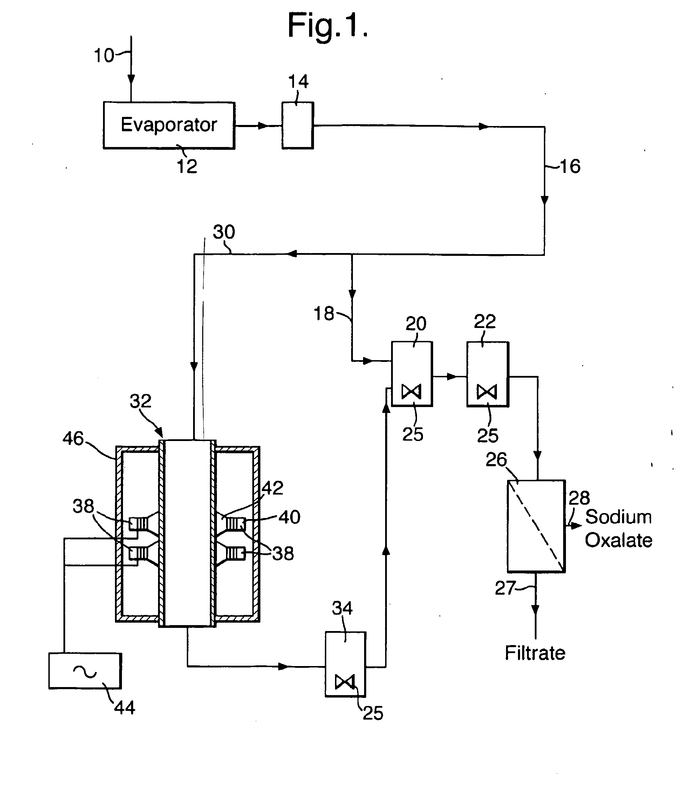

Referring to figure 1, spent Bayer liquor 10 is evaporated and cooled, through successive treatment steps 12, 14 (for example ending up at 70°C), so that the resulting liquor 16 is significantly more concentrated. The sodium oxalate is supersaturated, but tends not to come out of solution readily, probably because of the other organic material in solution. The liquor 16 is then supplied via a duct 18 to one or more successive hold-up tanks (two such tanks and 20 and 22 are shown in this example) each containing a stirring mechanism 25, in which, as discussed below, crystals form. Each tank 20 and 22 may be at the same temperature as the inflowing liquor 16, or alternatively successive tanks may be at lower temperatures. Finally the mixture of caustic solution and crystals is supplied to a filtration unit 26 such as a belt filter, and the filtrate 27 (which primarily consists of caustic soda and sodium aluminate solution) can be returned to the process stream used for dissolving bauxite. The filter cake 28 is primarily sodium oxalate, mixed with other organic and inorganic sodium salts, and can then be removed for disposal or further treatment.

Before it reaches the first hold-up tank 20, part of the liquor 16 is diverted into an ultrasonic treatment loop 30. Within the loop 30 is an ultrasonic treatment module 32 followed by a hold-up tank 34, and the loop 30 then feeds into the first hold-up tank 20. The loop 30 is shown diagrammatically, and the flow paths may typically be of nominally six inch (150 mm) diameter pipe, and the ultrasonic treatment module 32 comprises a stainless-steel duct of the same internal diameter.

To the outside of the duct wall are attached ten transducer modules 38 in a regular array. Each transducer module 38 comprises a 50 W piezoelectric transducer 40 which resonates at 20 kHz, attached to a conically flared aluminium coupling block 42 by which it is connected to the wall, the wider end of each block 42 being of diameter 63 mm. The transducer modules 38 are arranged in two circumferential rings each of five modules 38, the centres of the coupling blocks being about 105 mm apart around the circumference, and about 114 mm apart in the longitudinal direction. A signal generator 44 drives all the transducers 40. The transducer modules 38 are enclosed by a protective casing 46.

With this irradiator the power intensity is only about 1.6 W/cm², and is such that cavitation does not occur at the surface of the wall, so erosion of the duct does not occur. Nevertheless the power density is sufficient to ensure nucleation in a saturated solution. The volume of liquid which is subjected to insonation is about 5 1, so the power density is about 100 W/litre. (The power density can be adjusted by adjusting the power supplied to the transducers 40, but is usually between 40 and 100 W/litre.)

If no liquor 16 is passed around the ultrasonic treatment loop 30, the concentration of sodium oxalate has been found to be reduced by this treatment to 2.1-2.4 g/litre. In contrast, with insonation at 70°C, the concentration was reduced to 1.77-1.87 g/litre; and where the temperature is reduced to 55°C after insonation, the concentration was reduced to only 1.42 g/litre in the treatment loop 30. The exact results will depend upon the proportion of the liquor 16 which is passed through the ultrasonic treatment loop 30. Nucleation occurs in the liquor flowing through the ultrasonic treatment module 32, and the nuclei grow in the hold-up tank 34, so that the liquor emerging from the treatment loop 30 into the hold-up tank 20 already contains small sodium oxalate crystals. The liquor 16 flowing into the first hold-up tank 20 from the duct 18 is supersaturated, and so the crystals grow larger. Thus the first hold-up tank 20 initiates the crystallisation process, while the second hold-up tank 22 provides for crystal growth. The liquor may be held for a prolonged time (for example one or two hours) in each tank 20 and 22 to allow crystals to grow from any crystal nuclei. It will be appreciated that larger crystals of sodium oxalate are easier to separate from the filtrate in the filtration unit 26.

The flow rate through the ultrasonic treatment loop 30, and so through the duct, should be such that the liquor is insonated for a period between 1 s and 10 s, for example about 3 s. A larger quantity of liquor can be treated (per unit time), by using a longer irradiation duct of the same diameter, with more circumferential rings of five modules 38 each, the rings being spaced apart by 114 mm centre to centre in the longitudinal direction, as described in relation to the drawing. For example, using a duct with twenty such circumferential rings of five modules 38, and so with an insonation volume about ten times that of the duct shown in the drawing, the same insonation time can be achieved with a ten times increase in flow rate.

Preferably the proportion of the liquor 16 which is passed around the ultrasonic treatment loop 30 is at least 1%, more preferably at least 10%, and may indeed be 50% or more. On a large-scale plant it is preferable to treat about 40%-60% of the supersaturated liquor 16. Although it would be possible to treat all the liquor 16 by passage through the ultrasonic treatment loop 30, this is not essential. Combining a supersaturated liquor with a liquor containing crystals generated in the ultrasonic treatment loop 30, in hold-up tank 20, leads to the consequence that the entire stream of liquor 16 is exposed to the newly-formed crystals, and so the crystallisation process is very effective, and ensures that larger crystals are formed.

It will be appreciated that the plant shown in figure 1 may be modified in various ways. For example, in the ultrasonic treatment loop 30, the hold-up tank 34 might be omitted, and might be replaced by a heat exchanger to reduce the temperature of the liquor. And the number of hold-up tanks 20-22 may be different from that shown. For example, there might be four such successive hold-up tanks, with insonated liquor being introduced into the third hold-up tank (for example from the hold-up tank 34), so further nucleation is caused; and the fourth hold-up tank being provided for further crystal growth resulting from the nucleation initiated in the third hold-up tank 22.

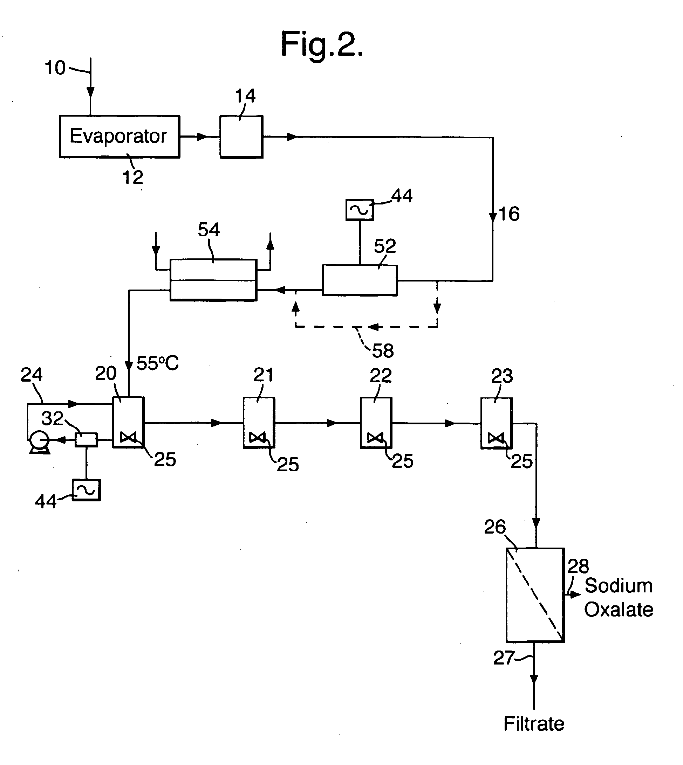

Referring to figure 2, a flow diagram is shown of a modification to the plant shown in figure 1; those features which are the same are referred to by the same reference numerals. The spent Bayer liquor 10 is ' evaporated and cooled, through successive treatment steps 12, 14 (for example ending up at 70°C), so that the resulting liquor 16 is significantly more concentrated. The liquor 16, in which sodium oxalate is supersaturated, is then passed through an ultrasonic treatment module 52 (substantially the same as the module 32, but modified in order to treat larger quantities of liquid, as discussed above), and then through a heat exchanger 54 to lower its temperature (e.g. to about 55°C). The liquor 16 is then supplied to four successive hold-up tanks 20-23 each containing a stirring mechanism 25, in which the liquor is held for a prolonged time (for example 45 minutes in each), to allow crystals to grow from any crystal nuclei formed as a result of the cooling and the passage through the ultrasonic treatment module 52. The tanks are at successively lower temperatures. Finally the mixture of caustic solution and crystals is supplied to a filtration unit 26 such as a belt filter, and the filtrate 27 (which is primarily caustic soda and sodium aluminate in solution) can be returned to the process stream used for dissolving bauxite. The filter cake 28 is primarily sodium oxalate and sodium carbonate, and possibly other salts; it can then be removed for disposal or processing.

Thus in use, crystal nuclei are formed as the liquor 16 flows through the treatment module 52; and these nuclei grow as a consequence of the increased supersaturation caused by the further cooling in the heat exchanger 54.

In the flow diagram of figure 2 the entire stream of liquor 16 is subjected to ultrasound in the treatment module 52. In a further modification, part of the stream 16 may bypass the treatment module 52 as shown by the broken line 58. A further modification is to provide a pumped recirculation loop 24, this loop 24 including an ultrasonic irradiation module 32, on one or more of the hold-up tanks. As shown, one such insonation loop 24 is provided on the first hold-up tank 20, and other such loops 24 may be provided on at least some of the other hold-up tanks, for example on the third hold-up tank 22. It will be appreciated that each such recirculation loop 24 that includes an ultrasonic irradiation module 32 will tend to produce new seed crystals (as long as the sodium oxalate remains supersaturated), which will grow in the associated hold-up tank, so further reducing the concentration of sodium oxalate in solution. The following hold-up tanks, 21 and 23 respectively, provide for crystal growth from the nuclei that have been initiated. And in a further alternative, additional ultrasonic irradiation modules 52 can also be placed in-line rather than in a recirculation loop, i.e. between one hold-up tank and the next.

As a further alternative (which may be used in conjunction with previously-described alternatives), part of the liquid flow emerging from the second hold-up tank 21 might be fed back into the stream of liquor 16 supplied to the ultrasonic treatment module 52. This will tend to clean the surfaces of the crystals of sodium oxalate, or break them up, so that more crystal growth will occur.

It will be appreciated that the treatment plants described in relation to figures 1 and 2 may be modified in various ways. For example the ultrasound might be generated at a different frequency. For example the frequency may be between 15 kHz and 100 kHz, or possibly even higher frequencies up to about 2 MHz. Frequencies above about 100 kHz are less effective at causing cavitation, but may nevertheless cause nucleation. And it will be appreciated that the means by which the ultrasound is coupled into the liquid may differ from that described above. For example the coupling blocks may be of a different size and shape, and of a different material. The spacing of the modules and their arrangement around the surface of the duct may also be different from that described.

## Claims

1. A method for removing sodium oxalate from a Bayer liquor, the method comprising removing a stream of the liquor, treating it to be supersaturated with sodium oxalate, and then subjecting it to ultrasonic irradiation, and removing resultant crystals.

2. A method as claimed in claim 1 wherein the stream of the supersaturated liquor is subjected to ultrasonic irradiation for a time no more than 30 seconds, more preferably no more than 10 seconds, for example 2 seconds or 3 seconds.

3. A method as claimed in claim 2 wherein the stream is caused to flow through a duct, and the contents of the duct are continuously subjected to ultrasonic irradiation.

4. A method as claimed in claim 3 wherein the ultrasound is applied using a multiplicity of ultrasonic transducers attached to a wall of the duct in an array of separate transducers extending both circumferentially and longitudinally, each transducer being connected to a signal generator so that the transducer radiates no more than 3 W/cm², the transducers being sufficiently close together and the number of transducers being sufficiently high that the power dissipation within the vessel is between 25 and 150 W/litre.

5. A method as claimed in claim 4 wherein the duct is of width at least 0.10 m.

6. A method as claimed in any one of the preceding claims wherein the Bayer liquor is first treated by evaporation so that it becomes supersaturated with sodium oxalate.

7. A method as claimed in any one of the preceding claims wherein the crystals resulting from ultrasonic irradiation are contacted with liquor that is supersaturated with sodium oxalate so the crystals grow, before removing resultant crystals.

8. A method as claimed in any one of the preceding claims wherein a stream of liquid that is supersaturated in sodium oxalate and which contains crystals of sodium oxalate is subjected to ultrasonic irradiation, to cause more crystal growth.

## Patentansprüche

1. Verfahren zur Beseitigung von Natriumoxalat aus einer Bayer-Flüssigkeit, **kennzeichnet durch** Ableitung eines Stromes der Flüssigkeit, Behandlung desselben, damit er mit Natriumoxalat übersättigt wird, und dann Aussetzen desselben einer Ultraschallbestrahlung und Entfernen der resultierenden Kristalle.

2. Verfahren nach Anspruch 1, bei dem der Strom von übersättigter Flüssigkeit der Ultraschallbestrahlung für eine Zeitdauer von nicht mehr als 30 Sekunden, noch bevorzugter nicht mehr als 10 Sekunden, zum Beispiel 2 Sekunden oder 3 Sekunden ausgesetzt wird.

3. Verfahren nach Anspruch 2, bei dem der Strom veranlasst wird, durch eine Leitung zu strömen, und der Inhalt der Leitung der Ultraschallbestrahlung kontinuierlich ausgesetzt wird.

4. Verfahren nach Anspruch 3, bei dem der Ultraschall unter Verwendung einer Vielzahl von Ultraschallwandlern zur Anwendung gebracht wird, die an der Wand der Leitung in einer Reihe von separaten Wandlern angebracht sind, die sich sowohl in Umfangsrichtung als auch in Längsrichtung erstrecken, wobei jeder Wandler mit einem Signalgenerator verbunden ist, so dass der Wandler nicht mehr als 3 W/cm² abstrahlt, die Wandler ausreichend dicht zusammen angeordnet sind und die Anzahl von Wandlern genügend groß ist, damit die Leistungs- bzw. Energiestreuung innerhalb des Behälters zwischen 25 und 150 W/Liter beträgt.

5. Verfahren nach Anspruch 4, bei dem die Leitung eine Weite von mindestens 0,10 m hat.

6. Verfahren nach einem der vorangehenden Ansprüche, bei dem die Bayer-Flüssigkeit zunächst durch Verdampfung behandelt wird, damit sie mit Natriumoxalat übersättigt wird.

7. Verfahren nach jedem der vorangehenden Ansprüche, bei dem die aus der Ultraschall-Bestrahlung resultierenden Kristalle mit einer Flüssigkeit in Kontakt gebracht werden, die mit Natriumoxalat übersättigt ist, so dass die Kristalle wachsen, bevor resultierende Kristalle weggenommen werden.

8. Verfahren nach jedem der vorangehenden Ansprüche, bei dem ein Flüssigkeitsstrom, der an Natriumoxalat übersättigt ist und der Kristalle aus Natriumoxalat enthält, der UltraschallBehandlung ausgesetzt wird, um mehr Kristallwachstum zu bewirken.

## Revendications

1. Procédé de retrait d'oxalate de sodium d'une liqueur Bayer, le procédé comprenant le retrait d'un courant de la liqueur, son traitement pour la sursaturer en oxalate de sodium, puis son exposition à une irradiation ultrasonore, et le retrait des cristaux résultants.

2. Procédé selon la revendication 1 dans lequel le courant de la liqueur sursaturée est exposé à une irradiation ultrasonore sur une durée ne dépassant pas 30 secondes, de préférence ne dépassant pas 10 secondes, par exemple égale à 2 secondes ou 3 secondes.

3. Procédé selon la revendication 2 dans lequel le courant est mis en circulation dans une conduite, et le contenu de la conduite est exposé en continu à une irradiation ultrasonore.

4. Procédé selon la revendication 3 dans lequel les ultrasons sont appliqués en utilisant une multiplicité dé transducteurs ultrasonores attachés à une paroi de la conduite en un réseau de transducteurs séparés s'étendant à la fois sur la circonférence et longitudinalement, chaque transducteur étant relié à un générateur de signaux de telle sorte que le transducteur n'émette pas plus de 3 W/cm², les transducteurs étant suffisamment proches et le nombre de transducteurs étant suffisamment élevé pour que la dissipation d'énergie à l'intérieur de la cuve se situe entre 25 et 150 W/litre.

5. Procédé selon la revendication 4 dans lequel la conduite est d'une largeur d'au moins 0,10 m.

6. Procédé selon l'une quelconque des revendications précédentes dans lequel la liqueur Bayer est d'abord traitée par évaporation de telle sorte qu'elle devienne sursaturée en oxalate de sodium.

7. Procédé selon l'une quelconque des revendications précédentes dans lequel les cristaux résultant de l'irradiation ultrasonore sont mis en contact avec une liqueur qui est sursaturée en oxalate de sodium de telle sorte que les cristaux grossissent, avant retrait des cristaux résultants.

8. Procédé selon l'une quelconque des revendications précédentes dans lequel un courant d'un liquide qui est sursaturé en oxalate de sodium et qui contient des cristaux d'oxalate de sodium est exposé à une irradiation ultrasonore, pour induire une croissance supplémentaire des cristaux.
